(19) Europäisches Patentamt

European Patent Office

Office européen des brevets

(11) **EP 0 826 191 B1**

(12) **EUROPÄISCHE PATENTSCHRIFT**

| | |
|---|---|
| (45) Veröffentlichungstag und Bekanntmachung des Hinweises auf die Patenterteilung: **11.09.2002 Patentblatt 2002/37** | (51) Int Cl.7: **G06K 19/16** |
| (21) Anmeldenummer: **96913444.4** | (86) Internationale Anmeldenummer: **PCT/DE96/00747** |
| (22) Anmeldetag: **24.04.1996** | (87) Internationale Veröffentlichungsnummer: **WO 96/035191 (07.11.1996 Gazette 1996/49)** |

(54) **BEUGUNGSOPTISCH WIRKSAME STRUKTURANORDNUNG**

OPTICALLY DIFFRACTIVE STRUCTURE

CONFIGURATION STRUCTURALE A ACTION OPTIQUEMENT DIFFRACTIVE

| | |
|---|---|
| (84) Benannte Vertragsstaaten: **AT CH DE ES FI FR GB IT LI NL** | (72) Erfinder: **STORK, Wilhelm D-76185 Karlsruhe (DE)** |
| (30) Priorität: **06.05.1995 DE 19516741** | (74) Vertreter: **LOUIS, PÖHLAU, LOHRENTZ & SEGETH Postfach 3055 90014 Nürnberg (DE)** |
| (43) Veröffentlichungstag der Anmeldung: **04.03.1998 Patentblatt 1998/10** | |
| (73) Patentinhaber: **LEONHARD KURZ GMBH & CO. 90763 Fürth (DE)** | (56) Entgegenhaltungen: **EP-A- 0 075 674**   **EP-A- 0 247 471** **EP-A- 0 360 969**   **GB-A- 2 093 404** |

**Beschreibung**

Die Erfindung betrifft eine Beugungsstruktur, bestehend aus eine oder mehrere beugungsoptisch wirksame Struktur bzw. Strukturen aufweisenden Flächenbereichen, insbesondere für visuell identifizierbare optische Sicherheitselemente für Wertdokumente, z.B. Banknoten, Kreditkarten, Ausweise oder Scheckdokumente, oder sonstige zu sichernde Gegenstände.

Unter Verwendung einer derartigen Strukturanordnung können durch Beugung und/oder Brechung einfallenden Umgebungslichts einem Betrachter visuell wahrnehmbare Informationen vermittelt werden. Es ist jedoch auch die maschinelle Erfassung optischer Informationen mittels geeigneter Geräte denkbar. Eine solche Strukturanordnung ist im einfachsten Fall durch eine, insbesondere geradlinige, auf der Oberfläche eines Flächenbereichs eines Trägerelements vorgesehene wellenförmige Reliefstruktur realisiert, an der einfallendes Umgebungslicht unter Beugung und/oder Brechung reflektiert wird. Unter dem Begriff der Wellen- oder Reliefstruktur wird hierbei nicht notwendigerweise eine Struktur mit einer im Querschnitt des Flächenbereichs betrachtet stetigen, insbesondere sinusförmigen Oberflächenlinie verstanden, sondern es kann sich dabei auch um rechteck-, stufen- oder keilförmige Oberflächenstrukturen handeln. Diese Oberflächenstrukturen können periodisch oder aperiodisch ausgebildet sein. Weiterhin ist es denkbar, daß die beugungsoptisch wirksamen Strukturen nicht ausschließlich von Reliefstrukturen gebildet sind, sondern daß Brechungsindexvariationen in strukturierter Form vorgesehen sind.

Die Beugung einfallenden oder durch die Strukturanordnung hindurchtretenden Lichts an den Strukturen der Flächenbereiche und damit die von dort ausgesandte Information in Form eines optischen Beugungsbildes werden durch die Gitter- oder Strukturparameter bestimmt. Bei Reliefstrukturen sind hier die Anzahl der Wellen- oder Gitterlinien pro Längeneinheit eines Flächenbereichs, die sog. Spatialfrequenz, sowie die Orientierung und die Querschnittsform der Reliefstruktur zu nennen. Die Querschnittsform ist u.a. durch die Höhenunterschiede in der Reliefstruktur bestimmt, und zwar sowohl durch die Höhenunterschiede zwischen den einzelnen Erhebungen untereinander als auch zwischen Erhebungen und Vertiefungen oder Tälern der Reliefstruktur. Bei Strukturen, die nicht von Reliefstrukturen sondern von strukturiert angeordneten Brechungsindexvariationen gebildet sind, sind die Strukturparameter entsprechend den vorstehenden Ausführungen definiert, wobei zusätzlich die Brechungszahlen der optisch wirksamen Schicht oder Schichten zu berücksichtigen sind. Durch geeignete Ausbildung und Anordnung der Strukturen kann eine die Phasenbeziehungen des einfallenden Lichts derart beeinflussende Strukturanordnung erhalten werden, daß eine bestimmte optische Information in einen bestimmten Betrachtungswinkelbereich ausgesandt und von einem Betrachter wahrgenommen werden kann, während in einen anderen Betrachtungswinkelbereich eine andere Information ausgesandt werden kann. Eine Veränderung der Phasenbeziehung durch die Strukturanordnung ergibt sich aus dem Produkt der Brechungszahl und der geometrischen Weglänge innerhalb oder an der Strukturanordnung. Die optischen Phasendifferenz (OPD) bei einer an einem Ort $x_1$ (etwa eine Erhebung der Struktur) und an einem Ort $x_2$ (etwa eine Vertiefung der Struktur) reflektierten oder gebeugten Welle wäre

$$OPD\ (x_1, x_2) = \int n\ (x_1, z)\ dz - \int n\ (x_2, z)\ dz.$$

Aus dieser Beziehung ergibt sich auch, daß es einen Unterschied macht, ob ein Reflexionsreliefgitter, wie es gängig ist, mit einem Lack bedeckt ist oder nicht, da nicht nur der Höhenunterschied allein, sondern auch die Brechungszahl der Deckschicht eingeht. In der Form des reflektierten oder durch die Struktur hindurchtretenden Lichts kann also einem Betrachter eine den Strukturen der Flächenbereiche entsprechende und u.a. vom Beleuchtungs- oder Betrachtungswinkel abhängige, visuell wahrnehmbare Information, insbes. eine Echtheitsinformation des gesicherten Gegenstands, vermittelt werden.

Durch die Verwendung von an sich bekannten Sicherheitselementen mit einer beugungsoptisch wirksamen Strukturanordnung bei den eingangs erwähnten zu sichernden Gegenständen ist es möglich, auch dem ungeübten Laien Echtheitsinformationen des gesicherten Gegenstands sichtbar zu machen. Gleichzeitig ist es möglich, eine Fälschung, z.B. in Form einer Vervielfältigung, unter Berücksichtigung bekannter Fälschungsverfahren, insbesondere optischer Vervielfältigungsverfahren, unmöglich zu machen oder hinreichend zu erschweren.

Es sind beispielsweise Beugungsstrukturen bekannt, bei denen durch gezielte Variation der o.g. Strukturparameter - Spatialfrequenz, Orientierung und Querschnittsform einer Reliefstruktur, Höhen- bzw. Phasenunterschiede in der Reliefstruktur - einem Betrachter in Abhängigkeit von der Beleuchtungsrichtung in einem bestimmten Betrachtungswinkelbereich eine bestimmte, von einem Flächenbereich ausgehende visuell wahrnehmbare optische Information vermittelt werden kann, während in demselben Betrachtungswinkelbereich von einem anderen Flächenbereich der Strukturanordnung ausgehend keine oder eine andere optische Information wahrnehmbar ist. Durch Verschwenken des die Strukturanordnung tragenden Trägerelements um eine in der Trägerebene liegende Achse oder um eine senkrecht zur Trägerebene verlaufende Achse verändert sich die von dem zuerst betrachteten Flächenbereich ausgehende Information - insbesondere kann dieser Flächenbereich dunkel erscheinen - während ein anderer Flächenbereich, der zunächst dunkel erschien, eine optische Information, beispielsweise in Form eines Farbeindrucks, vermittelt.

Aus der GB-A-2 093 404 ist eine Beugungsstruktur bekannt, welche aus mehreren, jeweils mindestens eine beugungsoptisch wirksame Struktur aufweisenden Flächenbereichen besteht, wobei zwei der Flächenbereiche mit einer bis auf den Parameter der optischen Tiefe identischen Gitterstruktur vorgesehen sind und dabei die optische Tiefe der Gitterstruktur über die Erstreckung eines Flächenbereichs konstant und von der optischen Tiefe der Gitterstruktur eines anderen Flächenbereichs verschieden ist. Durch die unterschiedlichen Gittertiefen wird eine bestimmte optische Information bei Betrachtung aus bestimmten Betrachtungsrichtungen erzeugt.

In der EP-A-0 247 471 ist eine Beugungsstruktur mit Bereichen verschiedener Gittertiefe gezeigt, wobei auch ein Versatz der Gitter dargestellt ist. Der Versatz der Gitter ist jedoch nicht gezielt oder bewusst vorgesehen. Ausserdem weisen die verschiedenen Gitter unterschiedliche Struktur-Parameter, insbesondere unterschiedliche Gitterfrequenz, auf.

Der vorliegenden Erfindung liegt die Aufgabe zugrunde, ein Fälschen. insbesondere Kopieren, einer Strukturanordnung der vorstehend beschriebenen Art weiter zu erschweren, insbesondere die Vielfalt der Codierungsmöglichkeiten für wahrnehmbare, optische Information zu vergrössern.

Diese Aufgabe wird erfindungsgemäss durch die Merkmale des Anspruchs 1 gelöst.

Die optische Tiefe wird bei reinen Reliefstrukturen von deren geometrischer Tiefe bestimmt; sie entspricht der optischen Weglängendifferenz zwischen zwei Strahlen, die an Erhebungen bzw. Vertiefungen der Reliefstrukturen reflektiert werden.Bei Strukturen mit lokalen Brechungsindexvariationen ist die optische Tiefe, die für die Phasenbeziehungen des an der Struktur gebeugten Lichts verantwortlich ist, durch die unterschiedlichen Brechungsindizes sowie zusätzlich durch unterschiedliche Dicken der Beschichtung gegeben. Die optische Tiefe einer Struktur bestimmt unter anderem den Anteil des von der geometrischen Reflektionsrichtung abgebeugten Lichts, d.h. die Beugungseffizienz dieser Struktur. Zwei bis auf den Parameter der optischen Tiefe identische Strukturen vermitteln somit in einer bestimmten Betrachtungsrichtung voneinander abweichende optische Informationen. Mit der Zuordnung einer Struktur mit einer bestimmten ersten optischen Tiefe zu einer innerhalb eines bestimmten Betrachtungswinkelbereichs erwünschten wellenoptischen Information in Verbindung mit der Zuordnung mindestens einer weiteren Struktur mit einer zweiten oder weiteren optischen Tiefe zu einer anderen erwünschten Information ist eine weitere Steuerungs- oder Codierungsmöglichkeit für einen zu vermittelnden Bildeindruck bei einer Strukturanordnung geschaffen, Wenn bspw. Teilbereiche mit bis auf ihre optische Tiefe identischer Struktur vorgesehen werden, deren Abmessungen mit dem unbewaffneten Auge nicht auflösbar sind, so können von demselben Gebiet der Strukturanordnung verschiedene optische Informationen vermittelt werden.

Durch einem gewünschten Bildeindruck entsprechende Anordnung der Teilbereiche kann somit in einer ersten Betrachtungsrichtung ein durch die Struktur einer ersten optischen Tiefe erzeugtes Bildmotiv in einer ersten Farbe erscheinen, während in einer anderen Betrachtungsrichtung ein von Teilbereichen einer Struktur mit einer zweiten optischen Tiefe erzeugtes Bildmotiv in einer anderen Farbe wahrgenommen werden kann. Um derartige Effekte zu erreichen, erweist es sich als vorteilhaft, wenn die optische Tiefe der jeweiligen Struktur einer bestimmten visuell wahrnehmbaren Wellenlänge oder einem Wellenlängenbereich zugeordnet ist. Die optische Tiefe einer Struktur kann jedoch auch einer maschinell erfaßbaren Wellenlänge bzw. einem maschinell erfaßbaren Wellenlängenbereich zugeordnet sein. Allgemein ist die Beugungseffizienz bei den üblichen Rechteckgittern bzw. sinusoidalen Gittern dann maximal, wenn ihre optische Tiefe eine Phasenverzögerung von $\pi$ hervorruft. Da Wellenerscheinungen periodisch sind, wiederholt sich diese maximale Beugungseffizienz in erster Näherung bei diesen symmetrischen Gitterformen bei einer optischen Tiefe der Phasenverzögerung $(2k - 1) \cdot \pi$, $k = 1, ....N$. Geometrisch errechnet sich diese Tiefe im Fall von Reflexionsgittern der 1. Ordnung ($k=1$) durch die Formel $\delta z = \lambda/4n$, wobei n den Brechungsindex der Deckschicht bezeichnet. Im Falle von sägezahnförmigen Echelettegittern wird die maximale Beugungseffizienz bei einer Tiefe, die einer Phasenverzögerung $2k\pi$ entspricht, erreicht. Gitter höherer Ordnung ($k>1$) weisen eine k-mal höhere Tiefe auf und sind deshalb schwieriger herstellbar. Eine optimale Steuerbarkeit wird jedoch mit einer optischen Tiefe der jeweiligen Struktur im Bereich zwischen 0 und einigen Vielfachen, vorzugsweise bis zum 10-fachen, der betrachteten Wellenlänge erzielt.

Erfindungsgemäss sind bei einzelnen der Teilbereiche, die mit bis auf den Parameter der optischen Tiefe identischer Gitterstruktur ausgebildet sind, die Gitterstrukturen um einen Bruchteil der Gitterperiode in der Ebene des Flächenbereichs gegeneinander versetzt und die Teilbereiche mit dem unbewaffneten Auge nicht mehr auflösbar, so dass bei Betrachtung des Flächenbereichs im Auge eine Addition der von den Teilbereichen ausgesandten Wellenfelder stattfindet, die mathematisch als Betragsquadratbildung beschrieben werden kann.

Diese Versetzung kommt einer Überlagerung der betrachteten Struktur mit einer weiteren beugungsoptisch wirksamen Struktur gleich, deren Dispersionsrichtung insbesondere quer zu dieser Struktur verlaufen kann. Hierdurch ergeben sich Möglichkeiten für den Schutz vor holographischen Kopiertechniken. Hologramme können gewöhnlich einfach dadurch kopiert werden, dass man ein Hologramm vom Hologramm herstellt. Als Holographie-Laser werden hauptsächlich Argon-Ionen- oder HeCd-Laser verwendet, da diese Laser starke Linien im blaugrünen (488 nm), im blauen (454, 442 nm) und im ultravioletten (ca. 350 nm) Frequenzbereich aufweisen. In diesem Bereich sind auch die meisten für holographische Oberflächenreliefs geeigneten Photolacke empfindlich; im roten Frequenzbereich hingegen sind diese Photolacke zumeist unempfindlich. Die Herstellung und das Kopieren von Hologrammen kann zwar auch mit roten Lasern (z.B. He Ne) durchgeführt werden; hierzu werden gegenwärtig silberhaltige Gelatineemulsionen (Photographische Platten) verwendet, die jedoch kein geeignetes Oberflächenrelief für die galvanische Abformung erzeugen. Wenn nun die optische Tiefe der Strukturen so gestaltet wird, daß die Beugungseffizienz für blaues Licht sehr klein, für rotes Licht hingegen sehr groß ist, so kann die Struktur mit einem blauen Laser nur schwer kopiert werden. Ein Kopieren des Hologramms auf eine rot-empfindliche Photoemulsion und anschließendes Umkopieren in ein blau-empfindliches Reliefmaterial ist zwar möglich, bringt jedoch weitere, dem Fachmann bekannte Nachteile mit sich und ist sehr aufwendig.

Da durch die Versetzung der Struktur eines Teilbereichs gegen die Struktur eines anderen Teilbereichs aufgrund der dadurch hervorgerufenen zusätzlichen Beugungserscheinung eine Auslöschung der in eine bestimmte Betrachtungsrichtung ausgesandten optischen Information erreicht werden kann, läßt sich durch die vorstehend beschriebene Ausbildung der Teilbereiche ein wirksamer Kopierschutz erreichen. So läßt sich bei einer Strukturanordnung ein Teilbereich, etwa eine Pixelhälfte, mit einer solchen optischen Tiefe ausbilden, daß die Beugungseffizienz für blaues Licht minimal ist, was gleichzeitig bedeutet, daß die Beugungseffizienz für rotes Licht zwar nicht maximal, aber doch beachtlich ist (für blaues Licht eines HeCd-Lasers mit $\lambda$ = 442 nm beträgt die optische Tiefe eines symmetrischen Rechteck- oder Sinusgitters mit minimaler Beugungseffizienz für diese Wellenlänge gerade 442 nm; bei dieser optischen Tiefe liegt jedoch für rotes Licht mit einer Wellenlänge von etwa 600 nm eine nicht maximale, aber beachtliche Beugungseffizienz vor). Ein anderer Teilbereich, etwa die andere Pixelhälfte, wird mit einer optischen Tiefe ausgebildet, bei der rotes Licht beispielsweise eine maximale Beugungseffizienz aufweist, also etwa mit 300 nm. Bei geeigneter Betrachtungsrichtung könnte dieser Teilbereich oder Bildpunkt dann im Blauen als mäßig hell wahrgenommen werden. Die Struktur des zweiten Teilbereichs kann nun gegenüber der Struktur des ersten Teilbereichs um einen solchen Bruchteil der Gitterperiode versetzt werden (ca. $2\pi/3$), daß sich die von den Teilbereichen abgebeugten Anteile des auftreffenden Lichts im Roten weitgehend auslöschen. Damit könnte z. B. eine dunkle Schrift auf rotem Untergrund erzeugt werden. Wird ein solches Hologramm mit einem blauen Laser kopiert, steht also nur die spezifische blaue Wellenlänge des Lasers zur Verfügung, so wird der Teilbereich, dessen Struktur eine optische Tiefe aufweist, die gerade einer Wellenlänge im blauen entspricht, nicht kopiert, da ihre Beugungseffizienz für blaues Licht minimal ist. Strukturen mit einer solchen optischen Tiefe können vom blauen Laserlicht nicht "gesehen" und somit auch nicht kopiert werden. Der andere Teilbereich, der für rotes Licht eine insbesondere maximale Beugungseffizienz aufweisen kann, hat jedoch auch eine gute Beugungseffizienz für blaues Licht, weshalb die Struktur dieses Teilbereichs gut kopiert werden kann. Wird die so im Blauen kopierte Struktur mit rotem Licht "ausgelesen", so fehlt der substraktive Effekt im Roten und das Muster erscheint an dieser Stelle mäßig rot. Der vorstehend erwähnte Schriftzug wäre dann wegen des schlechten Kontrasts im Roten schlecht oder nicht mehr lesbar, wodurch eine Unterscheidung zwischen echter Struktur und Duplikat möglich ist.

Für die Erzeugung eines homogenen Bildeindrucks wird vorgeschlagen, Teilbereiche der vorstehend beschriebenen Art aneinander angrenzend anzuordnen und insbesondere eine Vielzahl mit dem unbewaffneten Auge nicht mehr auflösbarer Teilbereiche vorzusehen.

Es wird darauf hingewiesen, daß eine erfindungsgemäße Strukturanordnung nicht notwendigerweise als Einschichtrelief (Lackrelief) ausgebildet sein muß, sondern auch ein Mehrschichtensystem sein kann. Es wäre also denkbar, eine Struktur in ein mehrschichtiges Substrat aus Lackschichten mit unterschiedlichen Brechnungsindizes einzuprägen. Dabei können sich verschiedene Lacke außer im Brechnungsindex auch in der Absorption unterscheiden. Dieses Mehrschichtensystem würde zu weiteren Interferenzeffekten führen und wäre durch ein einfaches Holographieren nicht zu kopieren.

Weitere Einzelheiten, Merkmale und Vorteile der Erfindung ergeben sich aus der beigefügten Zeichnung sowie aus der nachfolgenden Beschreibung bevorzugter Ausführungsformen der erfindungsgemäßen Strukturanordnung. In der Zeichnung zeigen:

Fig. 1   ein Sicherheitselement eines Wertdokuments mit einer sich aus mehreren schematisch angedeuteten Flächenbereichen zusammensetzenden Strukturanordnung,

Fig. 2   eine Schnittansicht einer erfindungsgemäßen Beugungsstruktur in schematischer Darstellung,

Fig. 3   zwei Teilbereiche einer erfindungsgemäßen Beugungsstruktur mit gegeneinander versetzter Reliefstruktur.

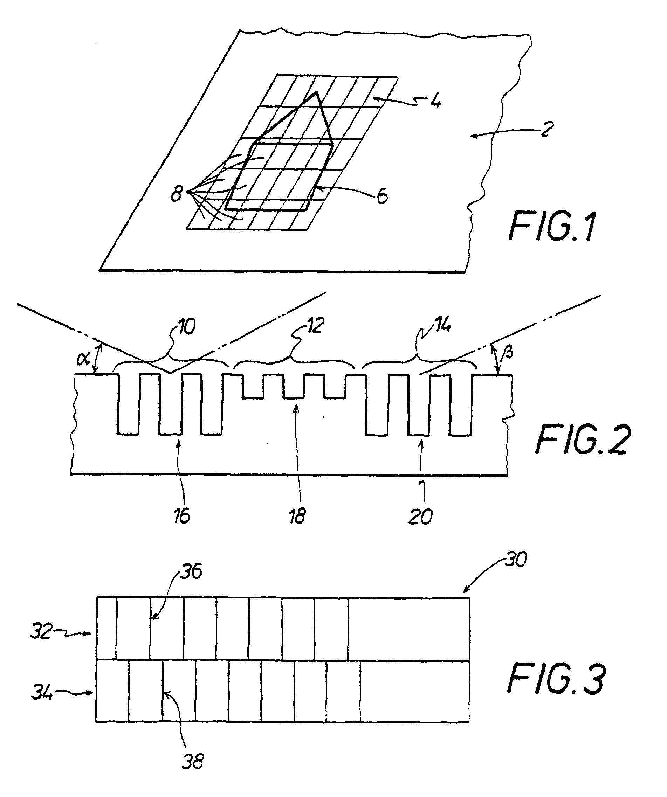

Fig. 1 zeigt einen Wertdokumententräger 2 mit einem Sicherheitselement 4. Das Sicherheitselement 4 umfaßt eine Strukturanordnung, in der eine visuell wahrnehmbare Information in Form eines Bildes 6 kodiert bzw. gespeichert ist. Das Sicherheitselement 4 bzw. die Strukturanordnung besteht aus einer Vielzahl von schematisch angedeuteten Flächenbereichen 8, die eine oder mehrere in der Fig. 1 nicht darstellbare Reliefstruktur bzw. -strukturen aufweisen.

Fig. 2 zeigt eine Schnittansicht eines Ausschnitts einer erfindungsgemäß ausgebildeten Strukturanordnung. Von der Strukturanordnung sind Teilbereiche 10, 12, 14 dargestellt, die insbes. zu dem gleichen Flächenbereich der Strukturanordnung gehören können. Die Teilbereiche 10, 12, 14 umfassen jeweils eine rechteckförmige Reliefstruktur 16, 18, 20. Die Reliefstrukturen 16, 18, 20 weisen dieselbe Spatialfrequenz, dasselbe Tastverhältnis sowie dieselbe geometrische Form auf, sie unterscheiden sich lediglich in der geometrischen Tiefe. Die Reliefstrukturen 16, 18, 20 sind ferner über die Erstreckung der jeweiligen Teilbereiche 10, 12, 14 unveränderlich.

Die Tiefe der jeweiligen Reliefstruktur 16, 18, 20 ist bspw. einem in einer bestimmten Richtung erwünschten Bildeindruck bzw. einer bestimmten Farbe oder einem Farbeindruck zugeordnet. Sie kann im allgemeinen bis zu einem Vielfachen der Wellenlänge betragen. Sie beträgt nach den eingangs gemachten Ausführungen in dem Fall der hier dargestellten rechteckigen Reliefstrukturen bis zu einem Viertel der möglichst effizient abzubeugenden Wellenlänge (oder auch einem ungeradzahligen Vielfachen davon), so daß zwischen den von den Erhebungen und den Tälern der Struktur reflektierten Wellen eine Phasendifferenz von π herbeigeführt werden kann (ist die Struktur mit einer transparenten Deckschicht bedeckt, so ist noch der Brechungsindex dieser Schicht zu berücksichtigen). Auf diese Weise kann in einer Einfallsrichtung α einfallendes Licht bei Betrachtung in einer Betrachtungsrichtung β in Form eines bestimmten Farbeindrucks von den Teilbereichen 10, 14 bzw. von deren identischer Reliefstruktur 16, 20 wahrgenommen werden. Demgegenüber kann durch geeignete Bestimmung der optischen Tiefe die Reliefstruktur 18 des Teilbereichs 12 so ausgebildet sein, daß dieser Teilbereich einen anderen Farbeindruck vermittelt. Wenn für Zwecke der Sicherheitsprüfung, etwa bei maschineller Erfassung von Echtheitsinformationen, Licht einer bestimmten Wellenlänge und in einem bestimmten Einfallswinkel auf das Sicherheitselement bzw. dessen Strukuranordnung auftrifft, so können in einer bestimmten Betrachtungsrichtung Teilbereiche einer bestimmten optischen Tiefe in der bestimmten Farbe des einfallenden Lichts erscheinen, während die Beugungseffizienz anderer Teilbereiche bzw. Reliefstrukturen für diese Wellenlänge so gering ist, daß diese Teilbereiche dunkel erscheinen.

Es werden nun Teilbereiche mit bis auf den Parameter der optischen Tiefe identischer Reliefstruktur so ausgebildet, daß diese Reliefstrukturen gegeneinander um einen Bruchteil der Gitterperiode in der Ebene des Flächenbereichs versetzt sind, was in der Fig. 3 in schematischer Darstellung gezeigt ist. Mit dem Bezugszeichen 30 ist ein Flächenbereich einer Strukturanordnung herausgegriffen, etwa ein Pixel eines Sicherheitselements. Der Flächenbereich 30 umfaßt zwei Teilbereiche 32, 34, die je eine Reliefstruktur 36 bzw. 38 aufweisen. Die Reliefstrukturen 36, 38 sind bis auf den Parameter der optischen Tiefe identisch ausgebildet, d.h. sie weisen dieselbe Spatialfrequenz, dieselbe Querschnittsform, d.h. gleichen Flankenanstieg, gleiche Geometrie des Plateaus sowie gleiches Tastverhältnis, auf. Die Tiefe der Reliefstrukturen 36 bzw. 38 ist jedoch so gewählt, daß die Beugungseffizienz bei voneinander abweichenden Wellenlängen ihr Maximum aufweist. Die Reliefstrukturen 36, 38 sind zudem gegeneinander um einen Bruchteil der Gitterperiode g in der Ebene des Flächenbereichs des Sicherheitselements versetzt angeordnet. Bei Betrachtung des Flächenbereichs 30 findet im Auge eine Addition der von den Teilbereichen 32, 34 ausgesandten Wellenfelder statt, die mathematisch als Betragsquadratbildung der an den Teilbereichen 32, 34 gebeugten Amplituden mit dem relativen Wert 1 bzw. Exp (iφ) beschrieben werden kann, wobei die Phase φ durch 2πδx/g gegeben ist. Die Intensität ergibt sich also zu

$$I = (1+Exp(i\phi)) \cdot (1+Exp(-i\phi)) = 2 + 2 \cos.\phi$$

Über die relative Verschiebung der Reliefstrukturen 36, 38 gegeneinander läßt sich also zusätzlich die Helligkeit des Flächenbereichs 30 einstellen. Aus den vorstehenden Überlegungen ergibt sich, daß einer Versetzung der Gitter um die Hälfte der Gitterperiode eine Phasenverschiebung von π entspricht, so daß bspw. eine Auslöschung der ersten Beugungsordnung aufgrund der so erzielten Strahlteilerfunktion der Beugungsstruktur erreicht werden kann.

**Patentansprüche**

1. Beugungsstruktur, insbesondere für visuell identifizierbare optische Sicherheitselemente (4) für Wertdokumente (2), z.B. Banknoten, Kreditkarten, Ausweise oder Scheckdokumente, oder sonstige zu sichernde Gegenstände, welche aus mehreren, jeweils mindestens eine beugungsoptisch wirksame Struktur aufweisen Flächenbereichen (8, 30) besteht, wobei für die Erzeugung vorbestimmter optischer Informationen in vorbestimmten Betrachtungsrichtungen einer oder mehrere der Flächenbereiche (8, 30) Teilbereiche (10, 12, 14; 32, 34) aufweisen, welche eine bis auf den Strukturparameter der optischen Tiefe identische Gitterstruktur (16, 18, 20; 36, 38) haben, wobei die optische Tiefe der Gitterstruktur (16, 18, 20; 36, 38) über die Erstreckung eines Teilbereiches (10, 12, 14; 32, 34) konstant, von der optischen Gitterstruktur (16, 18, 20; 36, 38) eines anderen Teilbereiches (10, 12, 14; 32, 34) jedoch verschieden ist, und wobei bei einzelnen der Teilbereiche (10, 12, 14; 32, 34), die mit bis auf den Parameter der optischen Tiefe identischer Gitterstruktur (16, 18, 20; 36, 38) ausgebildet sind, die Gitterstrukturen (16, 18, 20; 36, 38) um einen Bruchteil der Gitterperiode in der Ebene des Flächenbereiches gegeneinander versetzt sind, und wobei die Teilbereiche (10, 12, 14; 32, 34) mit dem unbewaffneten Auge nicht mehr auflösbar sind, so dass bei Betrachtung des Flächenbereichs (8, 30) im Auge eine Addition der von den Teilbereichen (10, 12, 14; 32, 34) ausgesandten Wellenfelder stattfindet, die mathematisch als Betragsquadratbildung beschrieben werden kann.

2. Struktur nach Anspruch 1,
   **dadurch gekennzeichnet,**
   **dass** die optische Tiefe der jeweiligen Gitterstruktur (16, 18, 20; 36, 38) einer vorbestimmten, visuell wahmehmbaren oder maschinell erfassbaren, zur Betrachtung der Struktur dienenden Lichtwellenlänge oder einem hierzu dienenden Wellenlängenbereich entsprechend gewählt ist.

3. Struktur nach Anspruch 2,
   **dadurch gekennzeichnet,**
   durch eine optische Tiefe der jeweiligen Gitterstruktur (16, 18, 20; 36, 38) der Teilbereiche (10, 12, 14; 32, 34) im Bereich zwischen 0 und dem Zehnfachen der zur Betrachtung der Struktur dienenden Lichtwellenlänge.

4. Struktur nach einem der vorstehenden Ansprüche,
   **dadurch gekennzeichnet,**
   **dass** die Teilbereiche (10, 12, 14; 32, 34) aneinander angrenzend angeordnet sind.

5. Struktur nach einem der vorstehenden Ansprüche,
   **dadurch gekennzeichnet,**
   **dass** die gegeneinander versetzten Gitterstrukturen (16, 18, 20; 36, 38) stets ineinander übergehend ausgebildet sind.

6. Struktur nach einem er vorstehenden Ansprüche,
   **dadurch gekennzeichnet,**
   **dass** sie ein Mehrschichten-Reliefsystem umfasst.

## Claims

1. Diffraction structure, in particular for visually identifiable optical security elements (4) for valuable documents (2), for example bank notes, credit cards, identity cards or cheque documents, or other objects to be safeguarded, which consists of a plurality of surface regions (8, 30) each having at least one structure which is active in terms of optical diffraction, one or more of the surface regions (8, 30) having for the purpose of generating predetermined optical information in predetermined directions of view subregions (10, 12, 14; 32, 34) which have a grating structure (16, 18, 20; 36, 38) which is identical except for the structural parameter of the optical depth, the optical depth of the grating structure (16, 18, 20; 36, 38) being constant over the extent of a subregion (10, 12, 14; 32, 34), but being different from the optical grating structure (16, 18, 20; 36, 38) of another subregion (10, 12, 14; 32, 34), and, in the case of individual subregions (10, 12, 14; 32, 34) which are designed with a grating structure (16, 18, 20; 36, 38) identical except for the parameter of the optical depth, the grating structures (16, 18, 20; 36, 38) being mutually offset by a fraction of the grating period in the plane of the surface region, the subregions (10, 12, 14; 32, 34) no longer being resolvable with the unaided eye, such that when the surface region (8, 30) is being viewed there takes place in the eye an addition of the wave fields emitted by the subregions (10, 12, 14; 32, 34) that can be described mathematically as forming the square of absolute values.

2. Structure according to Claim 1, **characterized in that** the optical depth of the respective grating structure (16, 18, 20; 36, 38) is selected in accordance with an optical wavelength that can be perceived visually or detected by machine and serves for viewing the structure, or in accordance with a wavelength region serving this purpose.

3. Structure according to Claim 2, **characterized by** an optical depth of the respective grating structure (16, 18, 20; 36, 38) of the subregions (10, 12, 14; 32, 34) in the range of between zero and ten times the optical wavelength serving for viewing the structure.

4. Structure according to one of the preceding claims, **characterized in that** the subregions (10, 12, 14; 32, 34) are arranged bordering one another.

5. Structure according to one of the preceding claims, **characterized in that** the mutually offset grating structures (16, 18, 20; 36, 38) are designed always merging into one another.

6. Structure according to one of the preceding claims, **characterized in that** it comprises a multilayer relief system.

## Revendications

1. Structure de diffraction, notamment pour éléments de sécurité optiques (4) identifiables visuellement pour documents de valeur (2), par exemple billets de banque, cartes de crédit, pièces d'identité ou documents du type chèque, ou autres objets à sécuriser, qui est constituée de plusieurs domaines de surface (8, 30) comportant chacun au moins une structure active sur le plan optique de diffraction, un ou plusieurs des domaines de surface (8, 30) comportant, pour la production d'informations optiques préfixées dans des directions d'observation préfixées, des domaines partiels (10, 12, 14 ; 32, 34) qui ont une structure de réseau (16, 18, 20 ; 36, 38) identique à l'exception du paramètre de structure de la profondeur optique, la profondeur optique de la structure de réseau (16, 18, 20 ; 36, 38) étant constante sur l'étendue d'un domaine partiel (10, 12, 14 ; 32, 34), mais étant différente de la structure de réseau optique (16, 18, 20 ; 36, 38) d'un autre domaine partiel (10, 12, 14 ; 32, 34), tandis que, pour des domaines partiels individuels (10, 12, 14 ; 32, 34) qui sont réalisés avec une structure de réseau (16, 18, 20 ; 36, 38) identique à l'exception du paramètre de la profondeur optique, les structures de réseau (16, 18, 20 ; 36, 38) sont décalées entre elles d'une fraction de la période de réseau dans le plan du domaine de surface et que les domaines partiels (10, 12, 14 ; 32, 34) ne peuvent plus faire l'objet d'une résolution a l'oeil nu, de sorte que, lorsqu'on observe à l'oeil le domaine de surface (8, 30), il se produit une addition des champs d'onde envoyés par les domaines partiels (10, 12, 14 ; 32, 34) qui peut être décrite mathématiquement comme étant une formation de carré de valeur.

2. Structure suivant la revendication 1, **caractérisée en ce que** la profondeur optique de la structure de réseau (16, 18, 20 ; 36, 38) chaque fois considérée est choisie d'une manière correspondant à une longueur d'onde de lumière préfixée, observable visuellement ou détectable par un appareil, qui sert à l'observation de la structure, ou à une gamme de longueurs d'onde servant à cet effet.

3. Structure suivant la revendication 2, **caractérisée par** une profondeur optique de la structure de réseau (16, 18, 20 ; 36, 38), chaque fois considérée, des domaines partiels (10, 12, 14 ; 32, 34) dans la gamme comprise entre 0 et le décuple de la longueur d'onde de lumière servant à l'observation de la structure.

4. Structure suivant l'une des revendications précédentes, **caractérisée en ce que** les domaines partiels (10, 12, 14 ; 32, 34) sont disposés d'une manière adjacente entre eux.

5. Structure suivant l'une des revendications précédentes, **caractérisée en ce que** les structures de réseau (16, 18, 20 ; 36, 38) décalées entre elles sont réalisées de manière à toujours faire l'objet d'une transition de l'une dans l'autre.

6. Structure suivant l'une des revendications précédentes, **caractérisée en ce qu'**elle comprend un système en relief à plusieurs couches.

*FIG.1*

*FIG.2*

*FIG.3*